**Europäisches Patentamt**

**European Patent Office**

**Office européen des brevets**

(19)

(11) Numéro de publication: **0 083 264**
**B1**

(12)

# FASCICULE DE BREVET EUROPEEN

(45) Date de publication du fascicule du brevet: **20.11.86**

(51) Int. Cl.⁴: **B 62 M 9/12**

(21) Numéro de dépôt: **82402288.3**

(22) Date de dépôt: **14.12.82**

(54) Dérailleur de pédalier perfectionné.

(30) Priorité: **23.12.81 FR 8124125**

(43) Date de publication de la demande:
**06.07.83 Bulletin 83/27**

(45) Mention de la délivrance du brevet:
**20.11.86 Bulletin 86/47**

(84) Etats contractants désignés:
**BE DE GB IT LU NL**

(56) Documents cités:
**FR-A- 668 833**
**FR-A-2 401 824**
**GB-A- 710 133**
**GB-A-2 036 895**

(73) Titulaire: **HURET ET SES FILS Société dite:**
**60 Avenue Félix Faure**
**F-92000 Nanterre (FR)**

(72) Inventeur: **Coue, Maurice Emmanuel Louis**
**6 Résidence du Vieux Puits**
**F-78810 Feucherolles (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

## Description

La présente invention concerne les dérailleurs avant ou dérailleurs de pédalier pour cycles.

Ces dérailleurs, qui sont utilisés pour faire passer la chaîne d'un plateau de pédalier à un autre, comportent en général une chape dont les deux branches, disposées de part et d'autre du brin supérieur de la chaîne, s'étendent parallèlement à ce dernier, cette chape étant reliée à un support fixé sur le cadre du cycle, par un mécanisme articulé adapté pour permettre un déplacement de la chape en translation suivant une direction contenue dans un plan à peu près parallèle à l'axe du pédalier, sous l'action d'un organe de commande tel qu'un câble actionné par l'utilisateur. Ce mécanisme peut être constitué par un parallélogramme articulé dont le support et une patte portée par la chape constituent deux côtés opposés reliées par deux biellettes. L'organe d'actionnement est en général accroché sur un prolongement d'une de ces biellettes et il ist prévu un organe élastique tendant à rappeler la chape vers sa position pour laquelle la chaîne se trouve sur le plus petit plateau situé vers l'intérieur par rapport au cadre du cycle. Un tel agencement est décrit, par exemple, dans le document GB—A—2 036 895 (correspondant au préambule de la revendication 1), dans lequel de plus, la chape de guidage est articulée sur un organe intermédiaire de façon à pouvoir effectuer un mouvement d'oscillation limité dans un plan perpendiculaire à l'axe du pédalier.

Bien entendu, d'autres mécanismes équivalents ou analogues à un parallélogramme articulé peuvent être disposés entre la chape et son support.

Cependant, dans tous ces agencements connus, l'amplitude du déplacement vertical de la chape est très faible, ce qui a pour conséquence de limiter l'écart possible entre deux plateaux portés par le pédalier.

Par ailleurs, les conditions de passage de la chaîne ne sont pas satisfaisantes: tout d'abord, lors de la venue en butée latérale de la chape contre la chaîne, des efforts imporants sont engendrés dans la chape, la chaîne et le plateau, ces deux derniers éléments étant amenés à se déformer sous l'effet de ces efforts latéraux.

De plus, lors de la montée d'un petit vers un grand plateau, la chape vient en contact avec la chaîne par sa partie arrière, de sorte que le passage ne s'effectue pas franchement et que des bruits de chaîne désagréables sont engendrés.

L'invention se propose de remédier à ces inconvénients et de fournir un dérailleur avant dans lequel les conditions de passage d'un plateau à l'autre soient très sensiblement améliorées.

A cet effet, elle a pour objet un dérailleur avant ou dérailleur de pédalier pour cycle, du type comprenant un organe de guidage de la chaîne, relié au cadre du cycle par un mécanisme articulé adapté pour permettre un déplacement de cet organe suivant une direction contenue dans un plan à peu près parallèle à l'axe du pédalier, cet organe venant en contact latéral avec la chaîne lors du passage d'un plateau à l'autre, le mécanisme articulé étant adapté pour permettre également un déplacement dudit organe dans un plan à peu près perpendiculaire à l'axe du pédalier et comportant un organe intermédiaire relié, d'une part, au support par des premiers moyens d'articulation, et d'autre part, à l'organe de guidage par des deuxièmes moyens d'articulation, caractérisé en ce que les deuxièmes moyens d'articulation forment un parallélogramme articulé dont les éléments constitutifs sont disposés dans un plan perpendiculaire à l'axe du pédalier.

Suivant un mode de réalisation:

— il est prévu un organe élastique sollicitant ledit organe de guidage vers sa position basse;

— il est prévu au moins une butée limitant la course dudit organe lors de son déplacement dans un plan perpendiculaire à l'axe du pédalier;

— ledit organe de guidage porte à sa partie arrière un galet ou autre moyen équivalent coopérant avec la partie supérieure du brin supérieur de la chaîne.

L'invention va être décrite plus en détail ci-dessous en se référant au dessin annexé donne à titre d'exemple et sur lequel:

— la Fig. 1 est une vue en élévation latérale avec arrachement d'un dérailleur avant suivant l'invention, la chaîne se trouvant sur le petit plateau;

— la Fig. 2 est une vue de l'arrière de ce mécanisme;

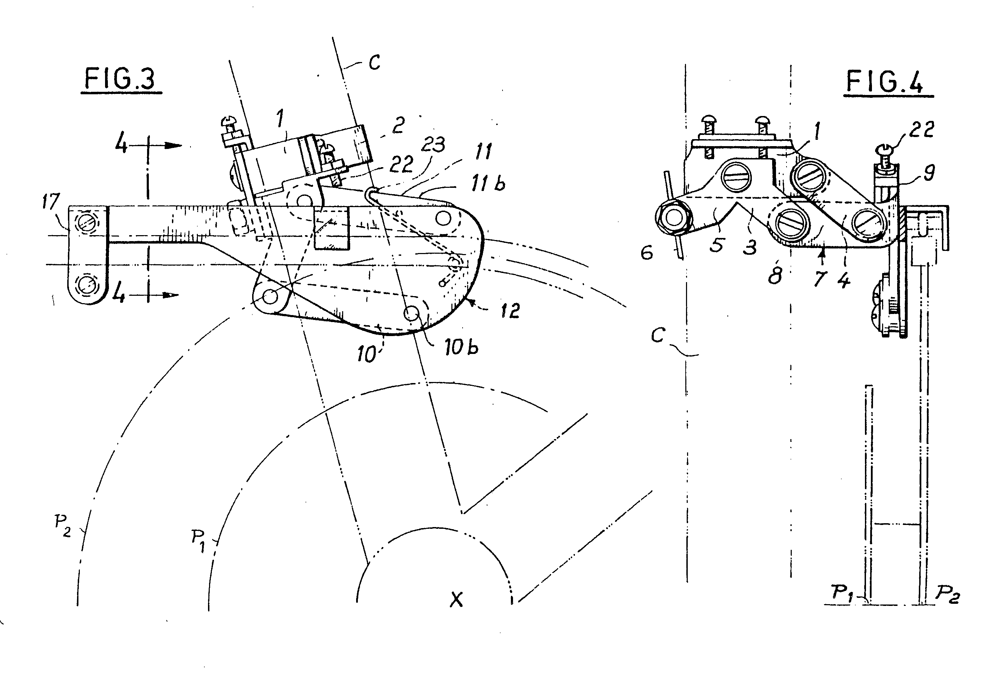

— la Fig. 3 est une vue analogue à celle de la Fig. 1 montrant le dérailleur dans la position pour laquelle la chaîne se trouve sur le grand plateau; et

— la Fig. 4 est une vue en coupe suivant la ligne 4—4 de la Fig. 3.

Le dérailleur suivant l'invention comprend un support 1 fixé au moyen d'un demi-collier 2 sur le cadre C d'un cycle. Sur ce support 1 sont articulées en $3^a$, $4^a$ deux biellettes 3, 4 dont l'une 3 est prolongée pour former un levier 5 sur lequel est fixée l'extrémité d'un câble d'actionnement 6. A leurs deux extrémités opposées les biellettes 3, 4 sont articulées en $3^b$, $4^b$ sur un support intermédiaire 7 constitué dans l'exemple représenté par une pièce métallique repliée en équerre, dont une des branches 8 constitue avec le support 1 et les deux biellettes 3, 4 un parallélogramme articulé contenu dans un plan à peu près parallèle à l'axe X—X du pédalier. L'autre branche 9 de cette pièce constitue l'un des côtés d'un deuxième parallélogramme articulé qui est contenu dans un plan à peu près perpendiculaire à l'axe X—X du pédalier et qui est complété par deux biellettes 10 et 11 articulées à une extrémité en $10^a$, $11^a$ sur la pièce 7 et à leurs extrémités opposées en $10^b$, $11^b$ sur un organe 12 de guidage de la chaîne. La biellette 10 est articulée sur l'organe 12 au voisinage de son bord inférieur, tandis que la biellette 11 est au contraire articulée sur ce même organe au voisinage de son bord supérieur. La branche 9 du deuxième parallélogramme est très inclinée sur la verticale et forme par exemple un angle inférieur à 30° avec cette verticale pour que l'amplitude du déplacement vertical de l'organe 12 puisse être importante.

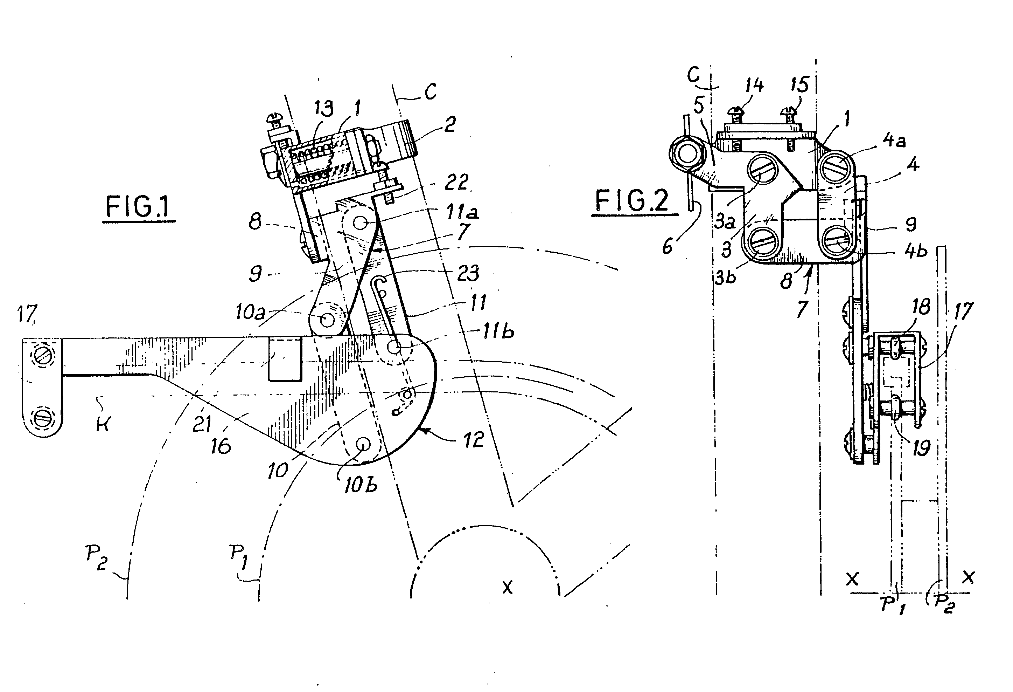

De façon classique, un ressort 13 de rappel du dérailleur vers sa position qui correspond à la venue en prise de la chaîne sur le petit plateau est incorporé au support 1, comme représenté sur la Fig. 1. De plus, sur ce même support sont prévues des butées réglables 14, 15 qui déterminent les positions extrêmes du premier parallélogramme articulé.

L'organe 12 de guidage de la chaîne comprend principalement une plaque 16 en métal ou autre matériau convenable suffisamment résistant, cette plaque comportant une partie avant de hauteur suffisamment importante pour permettre l'articulation des deux biellettes 10 et 11, la hauteur de cette plaque étant sensiblement réduite vers sa partie arrière. A son extrémité arrière, la plaque 16 est complétée par une chape 17 entre les branches de laquelle sont disposés deux galets 18, 19 en un matériau anti-friction, maintenus par exemple par vis et écrou ou autre moyen approprié. Par ailleurs, dans sa partie supérieure intermédiaire, la plaque 16 porte une patte repliée 20 qui peut être venue de matière et qui délimite une aile 21 parallèle à la plaque 17.

Le support intermédiaire 7 porte une vis de butée 22 coopérant avec le bord supérieur de la biellette 11 pour déterminer la position haute de cette plaque. Il est de plus prévu, entre la biellette 11 et la plaque 16, un petit ressort de rappel 23 qui tend à maintenir l'organe de guidage dans sa position basse représentée aux Fig. 1 et 2.

Dans l'exemple choisi, ce dérailleur est utilisé avec un pédalier comportant deux plateaux, un petit plateau $P_1$ comportant par exemple 34 dents et un grand plateau $P_2$ comportant par exemple 50 dents. Sur les dessins, ces plateaux ainsi que le cadre C et la chaîne K, sont représentés en traits mixtes.

Le fonctionnement d'un tel dérailleur est le suivant: à partir de la position représentée aux Fig. 1 et 2 dans lesquelles la chaîne K se trouve sur la petit plateau $P_1$, si l'utilisateur exerce sur le câble d'actionnement une traction, le premier parallélogramme 1, 3, 4, 8 se déforme pour éloigner du cadre l'ensemble constitué par le deuxième parallélogramme 9, 10, 11, 12 dont fait partie l'organe 12 de guidage de la chaîne. Après une certaine course, la plaque 16 vient en contact latéral avec la chaîne et, sous l'effet du frottement entre cette dernière et la plaque, cette plaque est entraînée vers le haut, ce que permet la déformation du deuxième parallélogramme. Dans cette deuxième partie du mouvement, l'organe de guidage de la chaîne subit donc un déplacement en translation complexe qui résulte de la déformation simultanée des deux parallélogrammes disposés dans deux plans perpendiculaires ou à peu près perpendiculaires.

Grâce à la présence du deuxième parallélogramme qui permet à l'organe 12 de se déplacer vers le haut en accompagnant le déplacement de la chaîne, on atténue très sensiblement les efforts latéraux qui sont engendrés dans un dispositif classique; on évite ainsi une déformation de la chaîne et des plateaux et l'on obtient un passage beaucoup plus franc, rapide et silencieux de la chaîne d'un plateau à l'autre. Ce résultat est encore accru par le fait que le dispositif permet d'attaquer la chaîne sensiblement plus près de la denture, en fait à une distance de cette denture correspondant au pas d'un maillon de la chaîne.

L'invention permet également d'assurer un passage de chaîne correct entre deux plateaux comportant un nombre de dents très différent.

Bien entendu, un fonctionnement analogue est obtenu lorsqu'on souhaite faite passer la chaîne du grand plateau $P_2$ sur le petit $P_1$. C'est alors la patte 21 qui se trouve située légèrement en arrière du cercle des dents du grand plateau qui vient en contact avec la chaîne et qui guide cette dernière vers le petit plateau tout en l'accompagnant dans son déplacement vers le bas.

Il est à noter que la présence du petit ressort de rappel 23 est facultative, l'organe de guidage de la chaîne pouvant reprendre sa position basse sous l'effet de son seul poids.

Par ailleurs, l'envention s'applique quelle que soit la façon dont est réalisé le mécanisme d'articulation provoquant le déplacement latéral de l'organe de guidage, dans un plan parallèle à l'axe du pédalier.

**Revendications**

1. Dérailleur avant ou dérailleur de pédalier pour cycle, du type comprenant un organe (12) de guidage de la chaîne, relié au cadre du cycle par un mécanisme articulé adapté pour permettre un déplacement de cet organe suivant une direction contenue dans un plan à peu près parallèle à l'axe (X—X) du pédalier, cet organe venant en contact latéral avec la chaîne lors du passage d'un plateau à l'autre, le mécanisme articulé étant adapté pour permettre également un déplacement dudit organe (12) dans un plan à peu près perpendiculaire à l'axe du pédalier et comportant un organe intermédiaire (7) relié, d'une part, au support (1) par des premiers moyens d'articulation (3, 4), et d'autre part, à l'organe de guidage (12) par des deuxièmes moyens d'articulation (10, 11) caractérisé en ce que les deuxièmes moyens d'articulation forment un parallélogramme articulé (9, 10, 11, 12) dont les éléments constitutifs sont disposés dans un plan perpendiculaire à l'axe (X—X) du pédalier.

2. Dérailleur suivant la revendication 1, caractérisé en ce que l'organe intermédiaire (7) a une forme en équerre et comporte deux branches (8, 9) respectivement à peu près parallèle et à peu près orthogonale à l'axe (X—X) du pédalier.

3. Dérailleur suivant l'une quelconque des revendications 1 et 2, caractérisé en ce qu'il est prévu un organe élastique (23) sollicitant ledit organe de guidage (12) vers sa position basse.

4. Dérailleur suivant l'une quelconque des revendications 1 et 2, caractérisé en ce qu'il est prévu au moins une butée (22) limitant la course dudit organe lors de son déplacement dans un plan perpendiculaire à l'axe du pédalier.

5. Dérailleur suivant l'une quelconque des revendications 1 à 4, caractérisé en ce que ledit organe de guidage porte à sa partie arrière un galet ou autre moyen équivalent coopérant avec la partie supérieure du brin supérieur de la chaîne.

6. Dérailleur suivant l'une quelconque des revendications 1 à 5, caractérisé en ce que l'organe de guidage (12) comprend une plaque (16) portant à sa partie arrière et dans sa partie intermédiaire deux pattes rabattues (17, 21) formant chapes.

7. Dérailleur suivant la revendication 6, caractérisé en ce que la chape (17) arrière porte deux galets (18, 19) entre lesquels passe la chaîne.

**Patentansprüche**

1. Vordere oder Tretkurbel-Gangschaltung für Fahrräder, umfassend ein Führungsorgan (12) zum Führen der Kette, welches am Rahmen des Fahrrades über einen Gelenkmechanismus befestigt ist, der eine Verschiebung dieses Führungsorgans in einer Richtung ermöglicht, die in einer zur Achse (x—x) des Tretlagers parallelen Ebene enthalten ist, wobei das Führungsorgan während des Schaltens von einem Zahnrad zum anderen mit der Kette in seitliche Berührung kommt, wobei der Gelenkmechanismus außerdem eine Verschiebung dieses Führungsorgans (12) in einer Ebene ermöglicht, welche annähernd rechtwinklig zur Achse des Tretlagers liegt, ferner umfassend ein Zwischenglied (7), welches einerseits mit dem Support (1) über eine erste Gelenkanordnung (3, 4) und andererseits mit dem Führungsorgan (12) über eine zweite Gelenkanordnung (10, 11) verbunden ist, dadurch gekennzeichnet, daß die zweite Gelenkanordnung ein Gelenkparallelogramm (9, 10, 11, 12) bildet, dessen Elemente in einer zur Achse (x—x) des Tretlagers rechtwinkligen Ebene angeordnet sind.

2. Gangschaltung nach Anspruch 1, dadurch gekennzeichnet, daß das Zwischenglied (7) gabelförmig ist und zwei Arme (8, 9) aufweist, die jeweils annähernd parallel bzw. annähernd rechtwinklig zur Achse (x—x) des Tretlagers sind.

3. Gangschaltung nach einem der Ansprüche 2 und 3, dadurch gekennzeichnet, daß ein elastisches Organ (23) vorgesehen ist, welches das Führungsorgan (12) in Richtung seiner unteren Position vorbelastet.

4. Gangschaltung nach einem der Ansprüche 1 und 2, dadurch gekennzeichnet, daß wenigstens ein Anschlag (22) vorgesehen ist, welcher den Weg des Führungsorgans während seiner Verschiebung in einer rechtwinklig zur Achse des Tretlagers stehenden Ebene begrenzt.

5. Gangschaltung nach einem der Ansprüche 1 bis 4, dadurch gekennzeichnet, daß das Führungsorgan in seinem hinteren Bereich eine Führungsrolle oder ein anderes äquivalentes Bauteil aufweist, welches mit der Oberseite des oberen Trums der Kette zusammenwirkt.

6. Gangschaltung nach einem der Ansprüche 1 bis 5, dadurch gekennzeichnet, daß das Führungsorgan (12) eine Platte (16) umfaßt, die in ihrem hinteren Bereich und in ihrem mittleren Bereich jeweils nach unten abgebogene, Bügel bildende Laschen (17, 21) aufweist.

7. Gangschaltung nach Anspruch 6, dadurch gekennzeichnet, daß der hintere Bügel (17) zwei Führungsrollen (18, 19) trägt, zwischen denen die Kette hindurchläuft.

**Claims**

1. A front derailleur or crank-gear derailleur for a cycle, of the type comprising a chain guide member (12) connected to the frame of the cycle by an articulated mechanism adapted to permit a displacement of said guide member in a direction contained in a plane substantially parallel to the axis (X—X) of the crank-gear, said guide members coming into lateral contact with the chain when shifting the chain from one chain wheel to the other, the articulated mechanism being adapted to permit also a displacement of said guide member (12) in a plane substantially perpendicular to the axis of the crank-gear and having an intermediate member (7) connected, on one hand, to the support (1) by first articulation means (3, 4) and, on the other hand, to the chain guide member (12) by second articulation means (10, 11), characterized in that the second articulation means constitute an articulated parallellogram structure (4, 10, 11, 12) whose component members are disposed in a plane perpendicular to the axis (X—X) of the crank-gear.

2. A derailleur according to claim 1, characterized in that the intermediate member (7) has the shape of an L and comprises two branches (8, 9) which are respectively substantially parallel to and substantially orthogonal to the axis (X—X) of the crank-gear.

3. A derailleur according to any one of claims 1 and 2, characterized in that an elastically yieldable member (23) is provided for biasing said chain guide member (12) toward its lower position.

4. A derailleur according to any one of claims 1 and 2, characterized in that it comprises at least one stop (22) for limiting the travel of said chain guide member when it is displaced in a plane perpendicular to the axis of the crank-gear.

5. A derailleur according to any one of claims 1 to 4, characterized in that said guide member carries in a rear part thereof a roller or the like which cooperates with the upper part of the upper reach of the chain.

6. A derailleur according to any one of claims 1 to 5, characterized in that the chain guide member (12) comprises a plate (16) carrying in a rear part thereof and in an intermediate part thereof two formed-over tabs (17, 21) constituting fork elements.

7. A derailleur according to claim 6, characterized in that the rear fork element (17) carries two rollers (18, 19) between which rollers the chain passes.

FIG.1

FIG.2

FIG.3

FIG.4

0 083 264